# NEUE EUROPÄISCHE PATENTSCHRIFT

(11) **EP 2 026 213 B2**
(45) Veröffentlichungstag und Bekanntmachung des Hinweises auf die Entscheidung über den Einspruch: **20.05.2015**
(45) Hinweis auf die Patenterteilung: 13.07.2011
(21) Anmeldenummer: 08013427.3
(22) Anmeldetag: 25.07.2008
(51) Int. Cl.: G06F 13/10, G07F 7/00, G06K 7/00

(54) **Installationsloser Chipkartenleser für sicheres Online Banking**
Installation-free chipcard reader for secure online banking
Lecteur de carte à puce sans installation pour transactions bancaires en ligne sécurisées

(30) Priorität: 09.08.2007 DE 102007037715
(43) Veröffentlichungstag der Anmeldung: 18.02.2009
(73) Patentinhaber: Kobil Systems GmbH, 67547 Worms (DE)
(72) Erfinder: Tak, Markus, 69488 Birkenau (DE)
(74) Vertreter: Cohausz & Florack

(56) Entgegenhaltungen:
- EP-A1- 1 168 137
- WO-A-02/065317
- WO-A-2005/109217
- WO-A1-02/065317
- WO-A1-2005/109217
- DE-A1- 10 212 619
- DE-A1- 10 212 620
- DE-A1-102005 028 393
- DE-A1-102005 055 417
- DE-C1- 10 139 889
- DE-U1-202007 002 971
- KR-A- 20070 027 155
- KR-B1- 100 720 374
- US-A1- 2005 138 434
- US-A1- 2005 278 461
- US-A1- 2007 045 417
- US-A1- 2007 045 417
- '"Universal Serial Bus", Device class definition for HID' FIRMWARE SPECIFICATION ISSN 6/27/01
- 'An Analysis of Wireless Device Implementations on Universal Serial Bus', 03 Juni 1997
- 'HID Game Controllers and DirectInput', 04 Dezember 2001

## Beschreibung

Die Erfindung beschreibt ein mobiles Smartcard-Lesegerät, welches handelsübliche Smartcards gemäß dem EMV Standard [1] (nicht Teil der Erfindung) ansprechen kann. Der EMV-Standard ist beschrieben in den von dem Unternehmen EMVCo LLC. herausgegebenen Spezifikationen (EMV™ Integrated Circuit Card Specifications for Payment Systems Version 4.0, EMVCo LLC., 2000; http://www.emvCa.org).

Aus US 2007/0045417 A1 ist beispielsweise ein USB-Gerät mit einem Chipkartenleser und einer USB-Schnittstelle zum Anschluss an einen Computer bekannt, wobei auf dem Computer Anwendungssoftware und ein Treiber für den Chipkartenleser installiert werden müssen, um das USB-Gerät zu steuern. In WO 02/065317 A1 wird ein System beschrieben, bei dem ein Peripheriegerät über eine Schnittstelle mit einem Computer verbunden ist. Der Computer kann mittels eines Web-Browsers über das Internet auf einen Web-Server zugreifen, wobei der Benutzer vom Web-Server ein Plugin auf den Computer herunterladen kann, welches eine Kommunikation zwischen Peripheriegerät und Web-Server ermöglicht. WO 2005/109217 A1 beschreibt ein Peripheriegerät mit einem Speicher, wobei in dem Speicher der Treiber des Peripheriegerätes gespeichert ist und von dort zu einem Computer übertragen werden kann. In nachteiliger Weise erfordern alle beschriebenen Systeme die Installation eines Treibers auf dem Computer.

Die besondere Erfindung liegt darin, dass für das mobile Smartcard-Lesegerät keinerlei Treiber-Software installiert werden muss, um es im Internet für die sichere Benutzer-Authentisierung und Legitimation von Transaktionen sowie Daten-Verschlüsselung zu benutzen. Dazu wird ein sogenanntes "Browser-Plugin" verwendet. Dieses Browser Plugin stellt die Verbindung zwischen dem mobilen Smartcard Lesegerät (der Erfindung) über den vorhandenen USB Treiber (nicht Teil der Erfindung) und dem Internet Server her.

Umfang der Erfindung ist somit das Browser-Plugin (7a/b) und das Smartcard Lesegerät (3), welches sich durch seine Ausprägung am USB-Anschluß (8) derart darstellt, dass es von handelsüblichen Betriebssystemen automatisch erkannt und eingebunden wird, ohne dass dafür ein herstellerspezifischer Treiber installiert werden muss.

Anwendungsgebiete:
- Internet Banking/Banktransaktionen (auch Wertpapiere, Kontoverwaltung etc)
   o sichere Anmeldung am Internet Banking Server (Identifikation des Benutzers)
   o digitale Unterschriften (Signaturen) für Transaktionen
- Sichere Anmeldung an Internet Portalen/geschützten Inhalten
   o Authentisierung des Benutzers

Mögliche Ausprägungen:
- Internet Browser: Internet Explorer, Mozilla Firefox u.ä.
- Betriebssystem : Microsoft Windows, Linux, Apple MacOS u.ä.
- Smartcard : EMV Chipkarten, Krypto-Chipkarten, Signatur-Chipkarten, PKI-Chipkarten - jeweils mit der Identität (ggf. als Pseudonym) des Benutzers, wobei auf der jeweiligen Chipkarte auch für eine Signatur oder Authentifizierung erforderliche kryptografische Schlüssel und/oder Algorithmen gespeichert sein können.
- USB-Treiber : Human Interface Device (HID)

HID (siehe http://www.usb.org/developers/hidpage/) bezeichnet eine Geräteklasse des USB-Standards für Computer, welche Geräte beschreibt, die direkt mit dem Benutzer interagieren. HID-Gerätetreiber sind in den gängigen Betriebssystemen enthalten.

Abgrenzung gegen bekannte Technik:
- USB Token mit aufgelötetem Kryptochip (Aladdin, US 6 763 399 B2)
   o Smartcard ist auswechselbar, dadurch ganz andere Personalisierung/Zuordnung zum Benutzer möglich
   o Keine Notwendigkeit für Treiber Installation, läuft auf allen handelsüblichen Betriebssystemen
- Smartcard (Speicher für Schlüsselmaterial)
   o ist nicht Teil dieser Erfindung, sondern wird nur zusammen mit der Erfindung genutzt
- Chipkartenleser
   o benötigen heutzutage immer die Installation von hersteller- und betriebssystemspezifischen Treibern
- Telekom Patent (Speicher+Smartcard)
   o kein Speicher auf dem Chipkartenleser
   o Smartcard ist austauschbar und von erfindungsgemäßen Gerät getrennt

### Detaillierte Beschreibung

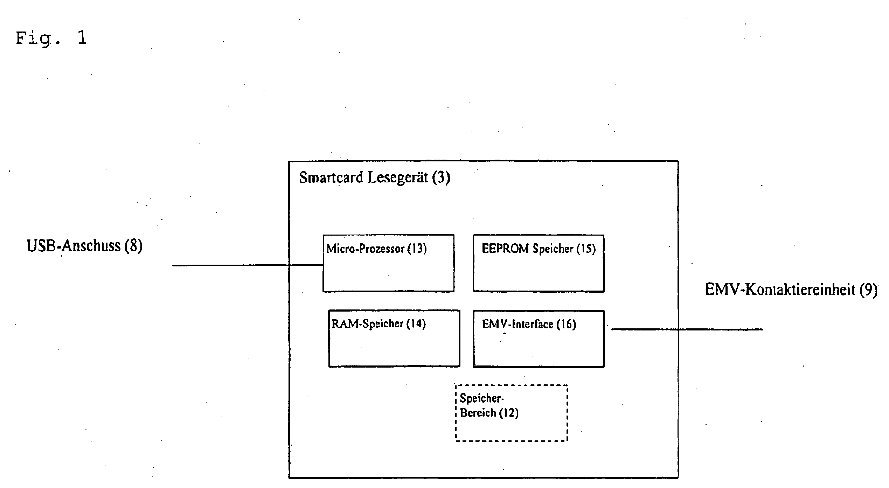

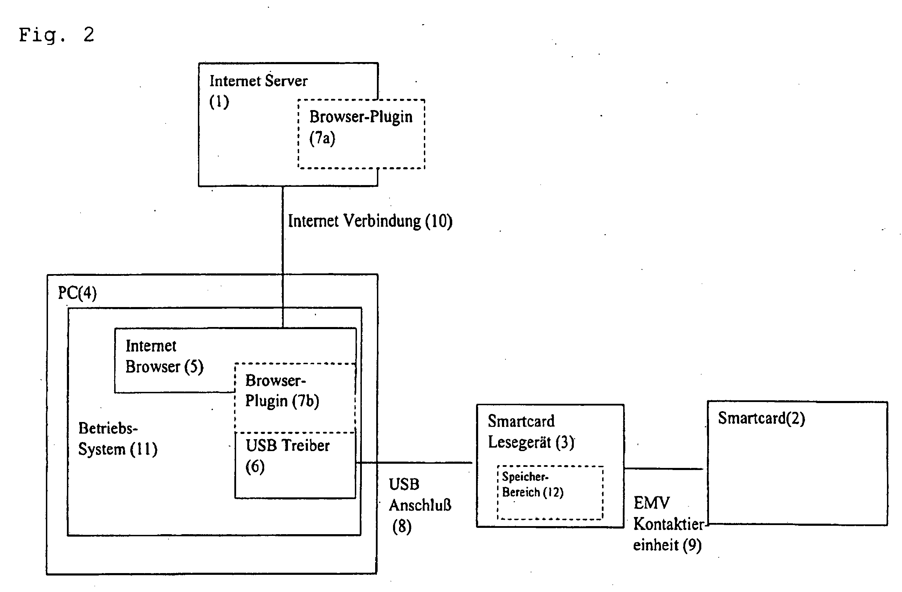

Im Folgenden wird Bezug genommen auf die Figuren 1 und 2.

Die Erfindung beschreibt ein Smartcard-Lesegerät(3), in welches eine beliebige Smartcard(2) nach dem EMV Standard eingelegt werden kann. Diese wird über eine EMV-Kontaktiereinheit(9) gemäß dem EMV-Standard angesprochen.

Das Smartcard-Lesegerät(3) wird über einen USB-Anschluß(8) an einen handelsüblichen Personal Computer (PC,4) angeschlossen und vom dort installierten Betriebssystem(11) über einen darin enthaltenen USB-Treiber(6) erkannt wird.

Somit entfällt die Notwendigkeit zur Installation eines spezifischen Treibers für das Smartcard-Lesegerät (3).

Um das Smartcard-Lesegerät (3) nutzbar zu machen, wird es von einem Browser-Plugin (7a) angesprochen. Es ist denkbar, daß das Browser-Plugin (7a) zunächst vom lokal installierten Internet Browser (5) vom Internet Server (1) heruntergeladen wird und im Internet Browser (5) installiert wird (7b). Über das Browser Plugin (7b), den USB-Treiber (6), den USB-Anschluß (8) und das Smartcard Lesegerät (3) kann der Internet Server (1) auf die Smartcard (2) zugreifen, um den Inhaber/Benutzer zu authentisieren und/oder Transaktionen mittels einer digitalen Unterschrift unterzeichnen zu lassen.

Im Folgenden wird eine Ausführungsform der Erfindung beschrieben.

Der Internet Browser (5) kann zusammen mit dem Browser-Plugin (7b) vorkonfiguriert in einem Speicherbereich (12) des Smartcard Lesegeräts (3) abgespeichert sein und von dort über den USB Treiber (6) und dem Betriebssytem (11) in den PC (4) geladen und dort ausgeführt werden. In diesem Fall ist kein Download vom Internet Server (1) notwendig, um die Transaktionen mit der Smartcard (2) durchführen zu können.

## Patentansprüche

1. Verfahren zum Steuern eines Chipkarten-Lesegerätes (3) durch ein mit dem Chipkarten-Lesegerät (3) verbindbares, insbesondere als Personal Computer ausgebildetes, Rechnersystem (4), umfassend die Schritte:
- Verbinden des Chipkarten-Lesegerätes (3) mit dem Rechnersystem (4) über eine Schnittstelle (8), welche zur Datenkommunikation auf Basis eines standardmäßig im Betriebssystem (11) des Rechnersystems (4) vorgesehenen USB-Protokolls ausgebildet ist, wobei sich das Chipkarten-Lesegerät (3) durch seine Ausprägung am USB-Anschluss (8) derart darstellt, dass es von handelsüblichen Betriebssystemen über den USB-Treiber für die Geräteklasse Human Interface Device (HID) automatisch erkannt und eingebunden wird, ohne dass dafür ein herstellerspezifischer Treiber installiert werden muss,
- Bereitstellen eines Steuerprogramms (7a, 7b) zur Steuerung der Funktionen des Chipkarten-Lesegerätes (3), wobei das Steuerprogramm (7a, 7b) als Plugin, insbesondere als Browser-Plugin, bereitgestellt wird, und wobei das Steuerprogramm (7b) in einem Speicher (12) des Chipkarten-Lesegeräts (3) bereitgestellt und vom Chipkarten-Lesegerät (3) zum Rechnersystem (4) übertragen wird, und
- Steuern des Chipkarten-Lesegerätes (3) durch Ausführen des Steuerprogramms (7b) auf dem Rechnersystem (4).

2. Verfahren nach Anspruch 1, wobei das Übertragen des Steuerprogramms (7b) vom Chipkarten-Lesegerät (3) zum Rechnersystem (4) automatisch bei Verbinden des Chipkarten-Lesegerätes (3) mit dem Rechnersystem (4) initiiert wird.

3. Chipkarten-Lesegerät (3) zum Anschluss an ein Rechnersystem (4), insbesondere an einen Personal Computer, umfassend:
- eine Anschlusseinheit (9) für den Anschluss einer Chipkarte (2),
- eine Schnittstelle (8) zum Anschluss an das Rechnersystem (4), ausgebildet zur Datenkommunikation auf Basis eines USB-Protokolls, wobei das Chipkarten-Lesegerät (3) zur Steuerung mittels eines als Plugin, insbesondere als Browser-Plugin, ausgebildeten, auf dem Rechnersystem (4) ausgeführten Steuerprogramms (7b) ausgebildet ist, und wobei sich das Chipkarten-Lesegerät (3) durch seine Ausprägung am USB-Anschluss (8) derart darstellt, dass es von handelsüblichen Betriebssystemen über den USB-Treiber für die Geräteklasse Human Interface Device (HID) automatisch erkannt und eingebunden wird, ohne dass dafür ein herstellerspezifischer Treiber installiert werden muss, und
- einen Speicher (12), in welchem das Steuerprogramm (7b) gespeichert ist, wobei das Steuerprogramm (7b) vom Chipkarten-Lesegerät (3) zum Rechnersystem (4) übertragbar ist.

4. Steuerprogramm (7b) zur Ausführung auf einem Rechnersystem (4), insbesondere auf einem Personal Computer, zur Steuerung der Funktionen eines mit dem Rechnersystem (4) über eine Schnittstelle verbindbaren Chipkarten-Lesegerätes (3), **dadurch gekennzeichnet, dass** das Steuerprogramm (7b) als Plugin, insbesondere als Browser-Plugin, ausgebildet ist, und dass die Schnittstelle zur Datenkommunikation auf Basis eines standardmäßig im Betriebssystem (11) des Rechnersystems (4) vorgesehenen USB-Protokolls ausgebildet ist, wobei sich das Chipkarten-Lesegerät (3) durch seine Ausprägung am USB-Anschluss (8) derart darstellt, dass es von handelsüblichen Betriebssystemen über den USB-Treiber für die Geräteklasse Human Interface Device (HID) automatisch erkannt und eingebunden wird, ohne dass dafür ein herstellerspezifischer Treiber installiert werden muss, und wobei das Steuerprogramm (7b) in einem Speicher (12) des Chipkarten-Lesegeräts (3) bereitgestellt und vom Chipkarten-Lesegerät (3) zum Rechnersystem (4) übertragbar ist.

## Claims

1. Method for controlling a chip card reader (3) by means of a computer system (4), in particular a personal computer, which can be connected to the chip card reader (3), comprising the steps of:
- connecting the chip card reader (3) to the computer system (4) via an interface (8) which is designed for data communication on the basis of a USB protocol provided as standard in the operating system (11) of the computer system (4), wherein the chip card reader (3) is configured to present itself at the USB interface (8) in a way that it is automatically recognized and integrated by usual operating systems via the USB driver for the device class Human Interface Device (HID), without a manufacturer specific driver having to be installed for this purpose,
- providing a control program (7a, 7b) for controlling the functions of the chip card reader (3), wherein the control program (7a, 7b) is provided as a plug-in, in particular as a browser plug-in, and wherein the control program (7b) is provided in a memory (12) of the chip card reader (3) and is transferred from the chip card reader (3) to the computer system (4), and
- controlling the chip card reader (3) by running the control program (7b) on the computer system (4).

2. The method of claim 1, wherein the transfer of the control program (7b) from the chip card reader (3) to the computer system (4) is automatically initiated upon connection of the chip card reader (3) to the computer system (4).

3. Chip card reader (3) for connection to a computer system (4), in particular to a personal computer, comprising
- a port unit (9) for connection of a chip card (2),
- an interface (8) for connection to the computer system (4), designed for data communication on the basis of a USB protocol, wherein in particular as a personal computer the chip card reader (3) is designed for control by means of a control program (7b) which is designed as a plug-in, in particular a browser plug-in, and is executed on the computer system (4), wherein the chip card reader (3) is configured to present itself at the USB interface (8) in a way that it is automatically recognized and integrated by usual operating systems via the USB driver for the device class Human Interface Device (HID), without a manufacturer specific driver having to be installed for this purpose, and
- a memory (12), in which the control program (7b) is stored, wherein the control program (7b) is transferable from the chip card reader (3) to the computer system (4).

4. Control program (7b) for running on a computer system (4), in particular on a personal computer, for controlling the functions of a chip card reader (3) which can be connected to the computer system (4) via an interface, **characterized in that** the control program (7b) is designed as a plug-in, in particular as a browser plug-in, and that the interface is designed for data communication on the basis of a USB protocol provided as standard in the operating system (11) of the computer system (4), wherein the chip card reader (3) is configured to present itself at the USB interface (8) in a way that it is automatically recognized and integrated by usual operating systems via the USB driver for the device class Human Interface Device (HID), without a manufacturer specific driver having to be installed for this purpose, and wherein the control program (7b) is provided in a memory (12) of the chip card reader (3) and is transferable from the chip card reader (3) to the computer system (4).

## Revendications

1. Procédé permettant de commander un lecteur de cartes à puce (3) par un système d'ordinateur (4) conçu en particulier sous forme d'ordinateur personnel pouvant être relié au lecteur de cartes à puce (3), comportant les étapes suivantes :
- mise en liaison du lecteur de cartes à puce (3) avec le système d'ordinateur (4) via une interface (8), qui est conçue pour la communication de données sur la base d'un protocole USB prévu de façon standard dans le système d'exploitation (11) du système d'ordinateur (4), le lecteur de cartes à puce (3) se présentant par son empreinte au niveau du port USB (8) de telle sorte qu'il est automatiquement reconnu et intégré par les systèmes d'exploitation classiques par l'intermédiaire du pilote USB pour les appareils de la catégorie HID (Human Interface Device), sans qu'il soit nécessaire d'installer à cet effet un pilote spécifique du fabricant,
- mise à disposition d'un programme de commande (7a, 7b) permettant de commander des fonctions du lecteur de cartes à puce (3), le programme de commande (7a, 7b) étant mis à disposition comme plugin, en particulier comme plugin de navigateur, et le programme de commande (7b) étant mis à disposition dans une mémoire (12) du lecteur de cartes à puce (3) et étant transmis par le lecteur de cartes à puce (3) au système d'ordinateur (4), et
- commande du lecteur de cartes à puce (3) moyennant l'exécution du programme de commande (7b) sur le système d'ordinateur (4).

2. Procédé selon la revendication 1, la transmission du programme de commande (7b) du lecteur de cartes à puce (3) au système d'ordinateur (4) étant initiée automatiquement lors de la mise en liaison du lecteur de cartes à puce (3) avec le système d'ordinateur (4).

3. Lecteur de cartes à puce (3) destiné à être raccordé à un système d'ordinateur (4), en particulier un ordinateur personnel, comportant :
- une unité de raccordement (9) pour le raccordement d'une carte à puce (2),
- une interface (8) pour le raccordement au système d'ordinateur (4), conçue pour la communication de données sur la base d'un protocole USB, le lecteur de cartes à puce (3) étant conçu pour commander au moyen d'un programme de commande (7b), conçu comme plugin, en particulier comme plugin de navigateur, et exécuté sur le système d'ordinateur (4), et le lecteur de cartes à puce (3) se présentant par son empreinte au niveau du port USB (8) de telle sorte qu'il est automatiquement reconnu et intégré par les systèmes d'exploitation classiques par l'intermédiaire du pilote USB pour les appareils de la catégorie HID (Human Interface Device), sans qu'il soit nécessaire d'installer à cet effet un pilote spécifique du fabricant, et
- une mémoire (12), dans laquelle est stocké le programme de commande (7b), ledit programme de commande (7b) pouvant être transmis du lecteur de cartes à puce (3) au système d'ordinateur (4).

4. Programme de commande (7b) destiné à être exécuté sur un système d'ordinateur (4), en particulier sur un ordinateur personnel, pour la commande des fonctions d'un lecteur de cartes à puce (3) pouvant être relié au système d'ordinateur (4) via une interface, **caractérisé en ce que** le programme de commande (7b) est conçu comme plugin, en particulier comme plugin de navigateur, et **en ce que** l'interface pour la communication de données est conçue sur la base d'un protocole USB prévu de façon standard dans le système d'exploitation (11) du système d'ordinateur (4), le lecteur de cartes à puce (3) se présentant par son empreinte au niveau du port USB (8) de telle sorte qu'il est automatiquement reconnu et intégré par les systèmes d'exploitation classiques par l'intermédiaire du pilote USB pour les appareils de la catégorie HID (Human Interface Device), sans qu'il soit nécessaire d'installer à cet effet un pilote spécifique du fabricant, et le programme de commande (7b) étant mis à disposition dans une mémoire (12) du lecteur de cartes à puce (3) et pouvant être transmis du lecteur de cartes à puce (3) au système d'ordinateur (4).
